(19) Europäisches Patentamt
European Patent Office
Office européen des brevets

(11) **EP 3 926 905 A1**

(12) **EUROPEAN PATENT APPLICATION**
published in accordance with Art. 153(4) EPC

(43) Date of publication:
**22.12.2021 Bulletin 2021/51**

(51) Int Cl.:
**H04L 27/26** *(2006.01)*

(21) Application number: **19914805.7**

(22) Date of filing: **14.02.2019**

(86) International application number:
**PCT/JP2019/005452**

(87) International publication number:
**WO 2020/166045 (20.08.2020 Gazette 2020/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **TAKAHASHI, Yuki**
  **Tokyo 100-6150 (JP)**
• **TAKEDA, Kazuki**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL AND WIRELESS COMMUNICATION METHOD**

(57)     In order to appropriately control reception processing of a downlink control channel (or DCI) to which repeated transmission is applied, an aspect of a user terminal according to the present disclosure includes: a receiving section that receives a downlink control channel repeatedly transmitted by using one or a plurality of control resource sets; and a control section that controls, based on at least one of a parameter of a plurality of search space sets configured for a given control resource set and an index of repeated transmission, to monitor of downlink control channel candidates in the given control resource set.

FIG. 4A

FIG. 4B

FIG. 4C

EP 3 926 905 A1

**Description**

Technical Field

The present disclosure relates to a user terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, LTE Rel. 8 to Rel. 13), a user terminal (UE (User Equipment)) controls reception of a downlink shared channel (for example, a Physical Downlink Shared Channel (PDSCH)), based on downlink control information (also referred to as DCI, DL assignment, or the like) from a radio base station. The UE controls transmission of an uplink shared channel (for example, a Physical Uplink Shared Channel (PUSCH)), based on the DCI (also referred to as UL grant or the like).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (hereinafter referred to as NR), a scheme in which a given number of downlink control channel candidates (PDCCH candidates) or a set of downlink control channel candidates is monitored in a given range (for example, a search space) of a control resource set to detect the DCI has been under study. For example, the UE monitors the PDCCH candidates in one or a plurality of search space sets configured for the control resource set to control reception of the DCI (or the PDCCH).

For NR, in order to support ultra-reliable and low latency services (for example, services related to URLLC (Ultra Reliable and Low Latency Communications) (URLLC services)) or the like, application of repeated transmission for the PDCCH (PDCCH repetition) has been under study. However, how to control reception processing of the PDCCH (for example, monitoring of the PDCCH candidates or the like) to which repeated transmission is applied has not yet been fully studied.

The present disclosure is made in the light of the circumstances described above, and has an object to provide a user terminal and a radio communication method that enable appropriate control of reception processing of a downlink control channel (or DCI) to which repeated transmission is applied.

Solution to Problem

A user terminal according to an aspect of the present disclosure includes: a receiving section that receives a downlink control channel repeatedly transmitted by using one or a plurality of control resource sets; and a control section that controls, based on at least one of a parameter of a plurality of search space sets configured for a given control resource set and an index of repeated transmission, to monitor of downlink control channel candidates in the given control resource set. Advantageous Effects of Invention

According to an aspect of the present disclosure, the reception processing of the downlink control channel (or the DCI) to which the repeated transmission is applied can be appropriately controlled.

Brief Description of Drawings

FIG. 1A and FIG. 1B are each a diagram to show an example of a configuration of PDCCH candidates corresponding to repetition of a PDCCH;
FIG. 2A and FIG. 2B are each a diagram to show another example of the configuration of the PDCCH candidates corresponding to repetition of the PDCCH;
FIG. 3 is a diagram to show an example of a case in which the PDCCH candidates corresponding to respective repetitions are configured over a plurality of search space sets;
FIG. 4A to FIG. 4C are each a diagram to show an example of monitoring control of the PDCCH candidate corresponding to repetition;
FIG. 5A to FIG. 5C are each a diagram to show another example of the monitoring control of the PDCCH candidates corresponding to repetition;
FIG. 6A and FIG. 6B are each a diagram to show an example of mapping positions of the PDCCH candidates in different search space sets;
FIG. 7A to FIG. 7C are each a diagram to show another example of the monitoring control of the PDCCH candidates corresponding to repetition;
FIG. 8A and FIG. 8B are each a diagram to show an example of a mapping method of the PDCCH candidates in different search space sets;
FIG. 9 is a diagram to show an example of a schematic structure of a radio communication system according to one embodiment;
FIG. 10 is a diagram to show an example of a structure of a base station according to one embodiment;
FIG. 11 is a diagram to show an example of a structure of a user terminal according to one embodiment; and
FIG. 12 is a diagram to show an example of a hardware structure of the base station and the user terminal according to one embodiment.

Description of Embodiments

In existing LTE systems, a radio base station transmits downlink control information (DCI) to a UE by using a downlink control channel (for example, a PDCCH (Physical Downlink Control Channel), an enhanced PDCCH (EPDCCH), or the like). Transmitting the downlink control information may be interpreted as transmitting the downlink control channel.
The DCI may be, for example, scheduling information including at least one of information specifying time and frequency resources for scheduling data, information specifying a transport block size, information specifying a data modulation scheme, information specifying an HARQ process identifier, information related to a demodulation RS, and the like. The DCI for scheduling DL data reception and/or measurement of a DL reference signal may be referred to as a DL assignment or a DL grant, and the DCI for scheduling UL data transmission and/or transmission of a UL sounding (for measurement) signal may be referred to as a UL grant.
The UE is configured to monitor a set of a given number of downlink control channel candidates in the unit of given time. Here, for example, monitoring refers to attempting to decode each downlink control channel in a target DCI format in the set. Such decoding is also referred to as blind decoding (BD) or blind detection. The downlink control channel candidate is also referred to as a BD candidate, an (E)PDCCH candidate, or the like.
A search space and a search method of the downlink control channel candidates are defined as a search space (SS) set. One or a plurality of downlink control channel candidates are mapped to any one search space set.

(Search Space)

In NR, the user terminal (UE (User Equipment)) detects the DCI by monitoring (performing blind decoding on) the set of one or more search spaces (SSs) (search space set). The search space set includes a set of one or more candidates (PDCCH (Physical Downlink Control Channel) candidates) of a downlink control channel (for example, the PDCCH). In this specification, the "search space set" and the "search space" may be interchangeably expressed.
The search space set may include a search space set (common search space set (CSS (Common Search Space)) set) that is used for monitoring common (cell-specific) DCI for one or more user terminals, and a search space set (user-specific search space (USS) set) that is used for monitoring user terminal-specific DCI.
Each PDCCH candidate in the search space set is configured in the unit of a given resource, the number of which depends on an aggregation level. The unit of given resource may be a control channel element (CCE), a CCE group including one or more CCEs, or the like. Each CCE may include one or more resource elements (REs), one or more resource element groups (REGs), one or more REG bundles (REG group), or the like. Note that the REG may include one or more REs, and the REG bundle may include one or more REGs.

For example, when the aggregation level is 1, 2, 4, 8, or 16, each PDCCH candidate may be configured in the unit of 1, 2, 4, 8, or 16 consecutive resources (for example, CCEs), respectively.

The search space (or the search space set) may be associated with a control resource set (CORESET). The CORESET may include given frequency domain resources (for example, a given number of resource blocks (physical resource blocks (PRBs))) and time domain resources (for example, a given number of symbols).

The search space set associated with CORESET #p may be defined using the CCE corresponding to one or more PDCCH candidates in the search space set. For example, for example, search space set #s may include the CCE having an index (index number, index value) indicated by following Expression (1).

[Math. 1]

Expression (1)

$$
L \cdot \left\{ \left( Y_{p,n_{s,f}^{\mu}} + \left\lfloor \frac{m_{s,n_{CI}} \cdot N_{CCE,p}}{L \cdot M_{p,s,max}^{(L)}} \right\rfloor + n_{CI} \right) \mod \left\lfloor N_{CCE,p} / L \right\rfloor \right\} + i
$$

In Expression (1), $Y_{p,n_{s,f}^{\mu}}$ represents a given parameter, and for example, may be 0 in the CSS set, and may be determined based on a radio network temporary identifier (RNTI) in the USS set. $N_{CCE,p}$ represents the number of CCEs in CORESET #p.

$n_{CI}$ is a value of a carrier indicator (CI) field when configuration information related to cross carrier scheduling (also referred to as cross carrier scheduling configuration information, CrossCarrierSchedulingConfig, or the like) is configured. In contrast, $n_{CI}$ is 0 when the cross carrier scheduling configuration information is not configured (in a case of scheduling in the same carrier) or when the CSS set is used.

$m_{s,nCI}$ is 0, ..., $M_{p,s,nCI}^{(L)}$ - 1. $M_{p,s,nCI}^{(L)}$ is the number of PDCCH candidates configured so that the UE monitors an aggregation level L of a serving cell (cell, carrier, component carrier (CC)) corresponding to $n_{CI}$ and search space set #s.

$M_{p,s,max}^{(L)}$ may be $M_{p,s,0}^{(L)}$ regarding the CSS set, and may be a maximum $M_{p,s,nCI}^{(L)}$ out of all of the values of $n_{CI}$ configured regarding the aggregation level of search space set #s in CORESET #p regarding the USS set.

In this manner, for the UE, the number $M_{p,s,nCI}^{(L)}$ of PDCCH candidates for each aggregation level L of the serving cell corresponding to $n_{CI}$ is configured. The UE monitors the DCI regarding the search space set determined based on the number $M_{p,s,nCI}^{(L)}$ of PDCCH candidates.

(CORESET)

For NR, the use of the control resource set (CORESET) in order to transmit a physical layer control signal (for example, downlink control information (DCI) from the base station to the UE has been under study.

The CORESET is a parameter set necessary for resource allocation of a control channel (for example, the PDCCH (Physical Downlink Control Channel)). The UE may receive configuration information of the CORESET (which may be referred to as CORESET configuration) from the base station. The UE performs monitoring of the PDCCH, based at least on the configuration information of the CORESET, and detects the physical layer control signal.

The CORESET configuration may be, for example, reported using higher layer signaling. Here, the higher layer signaling may be, for example, any one of or a combination of RRC (Radio Resource Control) signaling, MAC (Medium Access Control) signaling, broadcast information, and the like.

The UE may receive configuration information of the search space (which may be referred to as search space configuration) in which the PDCCH monitoring is performed from the base station. Search space configuration information may include information related to the search space set configured for the UE. The search space configuration information may be, for example, reported to the UE using higher layer signaling (RRC signaling or the like). The search space set configured using the search space configuration information may be configured in association with the CORESET. Specifically, the UE can perform monitoring of the PDCCH, based on at least two of the CORESET configuration information and the search space configuration information.

The search space configuration information may mainly include information of PDCCH monitoring related configuration and decoding related configuration, and include information related to at least one of the followings, for example.

- Identifier of a search space set (search space set ID)
- CORESET ID associated with the search space set

- Flag indicating whether the search space set is a common search space (C-SS (Common SS)) configured in common to the UEs or is a UE-specific search space (UE-SS (UE-specific SS)) configured for each UE
- Number of PDCCH candidates for each aggregation level
- Monitoring period
- Monitoring offset
- Monitoring pattern in a slot (for example, a 14-bit bitmap)

The UE monitors the CORESET, based on the search space configuration information. "Monitoring of the CORESET" may be interpreted as "monitoring of the search space (PDCCH candidates) associated with the CORESET", "monitoring of the downlink control channel (for example, the PDCCH)", or the like.

The UE may determine correspondence between the search space set and the CORESET, based on the search space set ID and the CORESET ID included in the search space configuration information. One CORESET may be associated with one or a plurality of search space sets. A case in which a plurality of search space configurations are associated with one CORESET may be, for example, a case in which both of the C-SS and the UE-SS are configured in the CORESET. Note that one search space configuration may be associated with a plurality of CORESETs.

Incidentally, for NR, performing repeated transmission (repetition) in UL transmission and DL transmission has also been under study. For example, the base station (network (NW), gNB) repeatedly performs transmission of the downlink control channel (or the downlink control information) a given number of times. Repeated transmission of the PDCCH (or the DCI) may be referred to as PDCCH repetition. The number of repetitions may also be referred to as a repetition factor $N_{rep}$ or an aggregation factor Nrep .

The n-th repetition may also be referred to as the n-th transmission occasion or the like, and may be identified by a repetition index j ($0 \leq j \leq N_{rep}$ - 1). The UE may receive information related to the number of repetitions through higher layer signaling. Here, the higher layer signaling may be, for example, any one of or a combination of RRC (Radio Resource Control) signaling, MAC (Medium Access Control) signaling, broadcast information, and the like.

The UE monitors the PDCCH candidates corresponding to repeated transmission, and thereby receives the repeatedly transmitted PDCCH. For example, when the number of repetitions is four (the PDCCH is repeatedly transmitted four times), the UE monitors the PDCCH candidates in a given search space set in order to receive four PDCCHs.

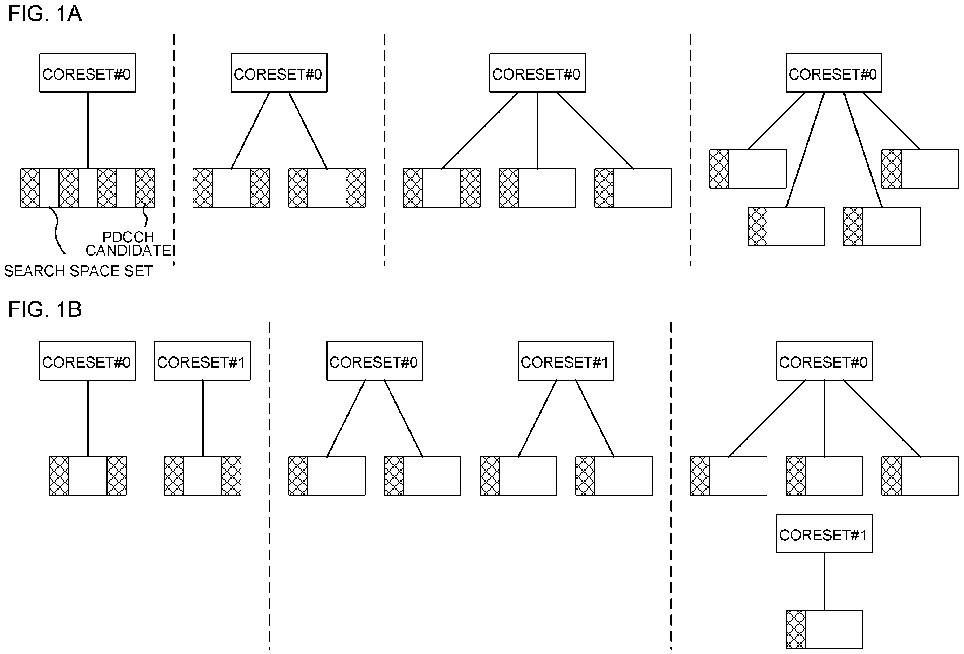

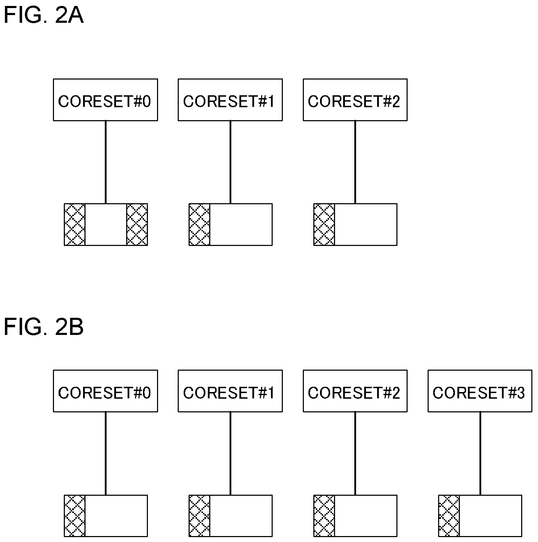

In this case, how to configure the search space set in which the PDCCH candidates corresponding to repeated transmission are mapped poses a problem. The following will describe an example of the search space set in which the PDCCH candidates corresponding to repeated transmission are mapped with reference to FIG. 1A, FIG. 1B, FIG. 2A, and FIG. 2B. Note that the following description will illustrate a case in which the number of repetitions of the PDCCH is four as an example. However, the present disclosure may be similarly applied to other numbers of repetitions as well.

FIG. 1A shows a case in which the PDCCH candidates corresponding to repeated transmission are mapped in the search space set configured for one control resource set (here, CORESET #0). In this case, configuration in which the PDCCH candidates corresponding to repeated transmission are mapped in one search space set configured for CORESET #0 is assumed.

Alternatively, configuration in which the PDCCH candidates corresponding to repeated transmission are mapped to a plurality of search space sets configured for CORESET #0 is assumed. For example, the PDCCH candidates corresponding to two times of repetition out of four times of repetition may be mapped to search space set #0, and the PDCCH candidates corresponding to the other two times of repetition may be mapped to search space set #1. The PDCCH candidates corresponding to respective repetitions may be respectively mapped to different search space sets.

FIG. 1B shows a case in which the PDCCH candidates corresponding to repeated transmission are mapped in the search space sets respectively configured for two control resource sets (here, CORESET #0 and CORESET #1). In this case, configuration in which the PDCCH candidates corresponding to repeated transmission are mapped in one or a plurality of search space sets configured for CORESET #0 and one or a plurality of search space sets configured for CORESET #1 is assumed.

For example, the PDCCH candidates corresponding to two times of repetition out of four times of repetition may be mapped to one or a plurality of search space sets configured for CORESET #0, and the PDCCH candidates corresponding to the other two times of repetition may be mapped to one or a plurality of search space sets configured for CORESET #1. Alternatively, the PDCCH candidates corresponding to three times of repetition may be mapped to the search space set configured for CORESET #0, and the PDCCH candidates corresponding to one time of repetition may be mapped to the search space set configured for CORESET #1.

FIG. 2A shows a case in which the PDCCH candidates corresponding to repeated transmission are mapped in the search space sets respectively configured for three control resource sets (here, CORESET #0 to CORESET #2). In this case, configuration in which the PDCCH candidates corresponding to repeated transmission are mapped in one or a plurality of search space sets respectively configured for CORESETs #0 to #2 is assumed.

For example, the PDCCH candidates corresponding to two times of repetition out of four times of repetition may be mapped to one or a plurality of search space sets configured for CORESET #0, and the PDCCH candidates corresponding to the other two times of repetition may be mapped to the search space sets respectively configured for CORESET #1 and CORESET #2.

FIG. 2B shows a case in which the PDCCH candidates corresponding to repeated transmission are mapped in the search space sets respectively configured for four control resource sets (here, CORESET #0 to CORESET #3). In this case, configuration in which the PDCCH candidates corresponding to repeated transmission are mapped in one or a plurality of search space sets respectively configured for CORESETs #0 to #3 is assumed.

The inventors of the present invention came up with the idea of applying at least one of the configurations shown in FIG. 1A, FIG. 1B, FIG. 2A, and FIG. 2B when repeated transmission of the PDCCH (or the DCI) is performed. The inventors of the present invention came up with the idea of monitoring control of the PDCCH candidates corresponding to repeated transmission of the PDCCH.

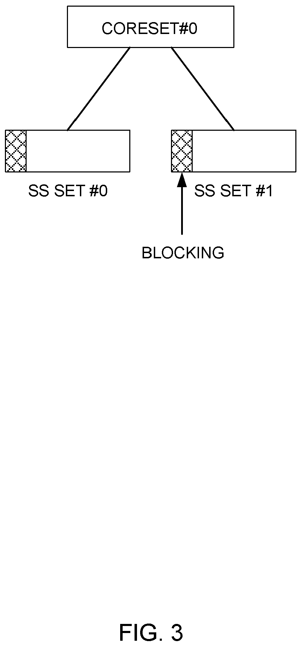

The inventors of the present invention focused on that, when the PDCCH candidates for repetition are mapped to different search space sets, the PDCCH candidates may collide with (or block) each other between the search spaces depending on the details of a parameter of each search space set. For example, when a given parameter of each search space set is configured to have the same contents, blocking or collision may occur between repetitions (for example, the n-th repetition and the (n+1)-th repetition) (see FIG. 3).

FIG. 3 shows a case in which a plurality of search space sets (here, search space sets #0 and #1) are configured for CORESET #0, and the PDCCH candidates corresponding to the n-th repetition are detected with a given CCE index X of search space set #0.

In such a case, given parameters of search space set #0 and search space set #1 are the same, and when the PDCCH candidates corresponding to the (n+1)-th repetition are mapped to the given CCE index X of search space set #1, the PDCCH candidates may collide with the PDCCH candidates corresponding to the n-th repetition. As a result, the repeatedly transmitted PDCCHs are failed to be appropriately combined (for example, soft-combined), which may cause deterioration of communication quality.

In the light of this, the inventors of the present invention came up with the idea of, when the PDCCH candidates are mapped to a plurality of search space sets corresponding to a given CORESET, controlling a mapping method of the PDCCH candidates (or a determination method of the CCE index corresponding to the search space), based on the parameter of each search space.

The present embodiment will be described below in detail with reference to the drawings. The aspects illustrated below may be applied individually, or may be applied in combination as appropriate.

(First Aspect)

In a first aspect, reception processing of the PDCCH (for example, monitoring operation of the PDCCH candidates) to which repeated transmission is applied will be described. The following will provide description by taking an example of a case in which the number of repetitions of the PDCCH is two ($N_{rep}$ = 2). However, the number of repetitions of the PDCCH may be configured to be larger than two.

The UE performs monitoring of the PDCCH candidates corresponding to repeated transmission, based on the configuration information of the CORESET, the configuration information of the search space, and the like configured from a network (for example, the base station). The base station may report the configuration information of the CORESET, the configuration information of the search space, and the like to the UE by using higher layer signaling.

The UE may control monitoring of the PDCCH candidates corresponding to repeated transmission, according to the following operations. Note that, regarding the following operations 1 to 3, the order thereof may be interchanged with one another when being applied, or any one of the operations (or a part of the procedures in each operation) may be omitted. Another operation may be added between operations 1 to 3. Note that the following operations 1 to 3 assume FIG. 1A. However, operations 1 to 3 may be adopted to FIG. 1B and FIGS. 2A and 2B.

<Operation 1>

The UE determines whether or not a target to be monitored (repetition index j) is a given value or less. The repetition index (j) may be defined as follows: j = 0, ..., $N_{rep}$ - 1. The given value may be determined based on the number of repetitions. For example, the UE starts (or continues) monitoring when j ≤ $N_{rep}$ - 1 is satisfied.

<Operation 2>

The UE determines the CORESET and the search space set in which the PDCCH candidates are to be monitored. When there is one configured CORESET, monitoring of the PDCCH candidates is performed in the search space set configured for the CORESET. When there are a plurality of search space sets configured for the CORESET, the order of monitoring the search space sets may be determined based on a given rule.

For example, the UE may preferentially monitor the search space set having a small index. As a matter of course, the monitoring order of the search spaces is not limited to the order from a small index. The monitoring order may be order from a large index, or may be determined based on another condition.

When a plurality of CORESETs are configured, the order of monitoring the CORESETs may be determined based on a given rule. For example, the UE may preferentially monitor the CORESET having a smaller index. As a matter of course, the monitoring order of the CORESETs is not limited to the order from a small index. The monitoring order may be order from a large index, or may be determined based on another condition.

Note that, when a plurality of cells are configured, and the CORESET and the search space are configured in each cell, the monitoring order of the PDCCH candidates may be controlled in consideration of a given condition (for example, a cell index or the like).

The following will describe an example of a determination method of the monitoring order (or search order) of the PDCCH candidates corresponding to a plurality of repetitions. The following description assumes a case in which the index of the CORESET to which the PDCCH candidates are allocated at the time of the first transmission (for example, the first repeated transmission) is p.

The UE selects the CORESET to which the PDCCH candidates can be allocated in order from the one having a small index (or in order from the one having a large index), starting from CORESET #p to which the PDCCH candidates corresponding to the first transmission are allocated, and performs monitoring. When CORESET #p$\pm$k is selected as the current search candidate, and the PDCCH candidates to which the PDCCH is allocated is failed to be detected in the CORESET, k is incremented, and the next CORESET is searched.

Specifically, when CORESET #p+k is selected, the UE may control whether or not to perform monitoring or the like in CORESET #p+k, based on the number of CCEs allocated in CORESET #p+k. Here, p is an index of the CORESET to which the PDCCH candidates are allocated at the time of the first transmission, and k is a search index of the CORESET being an allocation candidate. k may be defined as follows: $k = 0, ..., N_{rep} - 1$. For example, when the number ($N^{alloc}_{CCE,p+k}$) of CCEs actually allocated in CORESET #p+k is equal to or less than the number ($N_{CCE,p+k}$) of CCEs of CORESET #p+k (for example, $N_{CCE,p+k} \geq N_{CCE,p+k}^{alloc}$) , monitoring is started (or continued) in the search space configured for CORESET #p+k.

When search space #s is selected as the search space set corresponding to CORESET #p+k, the UE may control whether or not to perform monitoring or the like in search space set #s, based on the number of PDCCH candidates (the number of PDCCH candidates to be monitored) for each aggregation level (AL) of search space set #s. For example, when the number of PDCCH candidates actually monitored for a given AL of search space set #s is equal to or less than the number of PDCCH candidates configured for the given AL of search space set #s (for example, $M_s^{(L)} \geq M_{s,alloc}^{(L)}$ ) , monitoring is started (or continued) in search space set #s.

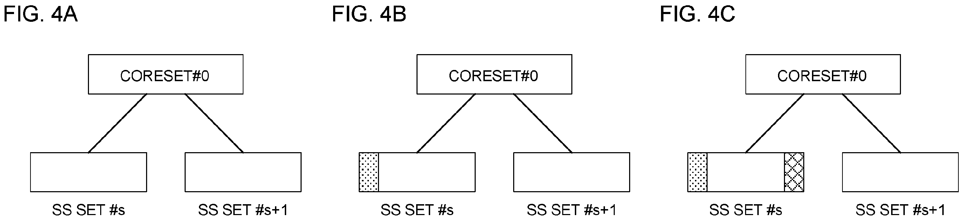

For example, a case in which search space set #s and search space set #s+1 are configured for CORESET #0 is assumed (see FIG. 4A). For the first repetition, the UE monitors the PDCCH candidates in search space set #s corresponding to CORESET #0.

When the UE detects the PDCCH candidates corresponding to the first repetition in search space set #s (see FIG. 4B), the UE performs monitoring of the PDCCH candidates corresponding to the second repetition. In this case, the UE may increment the repetition index (j), and execute monitoring processing from CORESET #p+k (for example, k = 0) again. Alternatively, when the number of PDCCH candidates monitored for the given AL of search space set #s is smaller than the number of PDCCH candidates configured in advance, the UE may perform monitoring of the PDCCH candidates corresponding to the second repetition in the same search space set #s.

When the PDCCH candidates corresponding to the second repetition are detected in search space set #s (see FIG. 4C), the monitoring operation of the PDCCH candidates may be terminated.

By controlling operation 2 as described above, monitoring of the PDCCH candidates is performed in order for each CORESET, which thus enables mapping of the PDCCH candidates to as few CORESETs (for example, one) as possible.

<Operation 3>

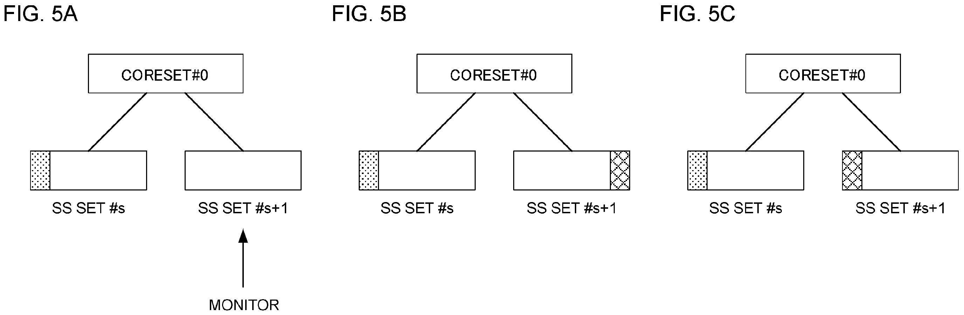

It may be also assumed that the UE fails to detect the PDCCH candidates corresponding to all of the repetitions in the same search space set (for example, search space set #s). For example, there is a case in which the PDCCH candidates corresponding to all of the repetitions are failed to be detected in the same search space set (for example, a case in which $M_s^{(L)} > M_{s,alloc}^{(L)}$) is not satisfied in the middle of monitoring) or the like. In this case, the UE performs monitoring of the PDCCH candidates (for example, the PDCCH candidates corresponding to the second repetition) in another search space set (here, search space set #s+1) configured for CORESET #0 (see FIG. 5A).

When the UE performs monitoring of the PDCCH candidates in other search space set #s+1, the UE may determine whether or not given parameters configured for search space set #s+1 and monitored search space set #s are the same. The UE may determine the positions at which the PDCCH candidates mapped to search space set #s+1 are mapped (for example, the CCE indices at which the PDCCH candidates are mapped), based on the determination results.

When the given parameter corresponding to search space set #s and the given parameter corresponding to search space set #s+1 are the same, the UE may control to monitor by assuming that the PDCCH candidates are mapped to different positions (for example, CCE indices) in search space set #s+1 (see FIG. 5B).

The given parameter may be at least one (all or a part) of the following parameters configured for the UE with a higher layer parameter (for example, SearchSpace) for each search space set.

(1) Search space ID (SearchSpaceID)
(2) Control resource set ID (controlResourceSetId)
(3) Information indicating a monitoring period and an offset of a search space (monitoringSlotPeriodicityAndOffset)
(4) Duration of a search space
(5) Number of monitoring symbols in a slot (monitoringSymbolWithinSlot)
(6) Number of PDCCH candidates for each AL in search space (nofCandidates)
(7) Search space type (searchSpaceType)

As an example, when all or a part of the parameters (2), (3), (4), and (5) are the same between different search space sets, control may be performed so that the PDCCH candidates are mapped to different positions (for example, CCE indices) between the search space sets (Different mapping).

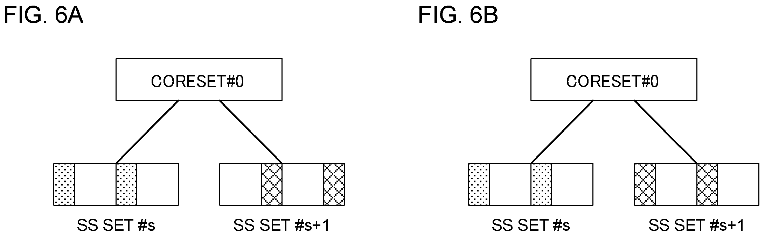

When the number of repetitions is four, the PDCCH candidates corresponding to two times of repetition mapped to search space set #s and the PDCCH candidates corresponding to two times of repetition mapped to search space set #s+1 may be mapped to different positions (see FIG. 6A).

In contrast, when the given parameter corresponding to search space set #s and the given parameter corresponding to search space set #s+1 are different from each other, the UE may control monitoring by assuming that the PDCCH candidates are mapped to the same positions (for example, CCE indices) in search space set #s+1 (see FIG. 5C).

As an example, when all or a part of the parameters (2), (3), (4), and (5) are different between different search space sets, control may be performed so that the PDCCH candidates are mapped to the same positions (for example, CCE indices) between the search space sets (Same mapping).

When the number of repetitions is four, the PDCCH candidates corresponding to two times of repetition mapped to search space set #s and the PDCCH candidates corresponding to two times of repetition mapped to search space set #s+1 may be mapped to different positions (see FIG. 6B).

As described above, mapping of the PDCCH candidates in each search space set is controlled according to parameter contents corresponding to different search space sets. In this manner, even when the configuration that the PDCCH candidates corresponding to repeated transmission are mapped to a plurality of search space sets is supported, blocking of the PDCCH can be reduced. As a result, repeated transmission of the PDCCH can be appropriately implemented, and therefore deterioration of communication quality can be reduced.

<Variations>

The above description illustrates a case in which the PDCCH candidates corresponding to a plurality of repetitions are mapped to one or a plurality of search space sets configured for the same CORESET (for example, CORESET #0) to the extent possible. However, this is not restrictive. For example, the PDCCH candidates corresponding to each repetition (for example, the n-th repetition and the (n+1)-th repetition) may be respectively mapped to the search space sets corresponding to different CORESETs. Note that the following operation can be appropriately applied to FIGS. 2A and 2B.

Note that, in the following description, operations 1 to 3 described above may be used as appropriate. In this case, in the operations described above, $N_{CCE,p+k}$ and $N_{CCE,p+k}^{alloc}$ may be respectively replaced by $N_{CCE,j}$ and $N_{CCE,j}^{alloc}$. Given CORESET #p may be replaced by a CORESET associated with a repetition index.

The UE may determine at least one of the CORESET and the search space in which monitoring is performed, based on an index of the repeated transmission (also referred to as a repetition index (j)).

The repetition index (j) and the index of the CORESET may be configured in association with each other. The correspondence between the repetition index and the CORESET may be defined in a specification, or may be reported from the base station to the UE using higher layer signaling or the like. For example, the UE performs monitoring of the PDCCH candidates corresponding to the repetition index (j) in the search space set configured for CORESET (j) associated with the repetition index.

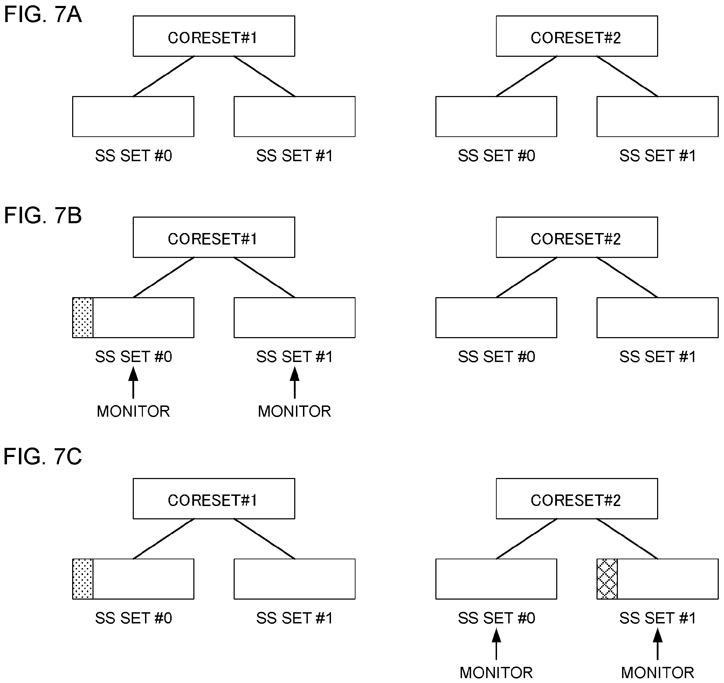

As an example, a case in which CORESET #1 is configured for the first repetition, and CORESET #2 is configured for the second repeated transmission is assumed (see FIG. 7A). Note that one or a plurality of search space sets are configured for each CORESET. The search space (for example, at least one of an index and a configuration number) configured for each CORESET may be the same, or may be different.

The UE performs monitoring of the PDCCH candidates in the search space sets (here, search space sets #0 and #1) configured for CORESET #1 regarding the first repetition. When the UE detects the PDCCH candidates to which the PDCCH (or the DCI) is allocated in search space set #0 (see FIG. 7B), the UE may omit monitoring in another search space set configured for CORESET #1. In contrast, when the UE fails to detect the PDCCH candidates to which the PDCCH is allocated in search space set #0 with a given range (for example, a configured number of PDCCH candidates or less), the UE performs monitoring in another search space set configured for CORESET #1.

When the UE detects in the search space set configured for CORESET #1 regarding the first repetition, the UE performs monitoring of the PDCCH candidates corresponding to the second repetition in the search space set (for example, search space set #0) of another CORESET (for example, CORESET #2) (see FIG. 7C). FIG. 7C shows a case in which the UE detects the PDCCH candidates to which the PDCCH (or the DCI) is allocated in search space set #1.

In this manner, by mapping the PDCCH candidates corresponding to each repetition to the search spaces respectively configured for a plurality of CORESETs, the effect of frequency diversity can be obtained. By mapping the PDCCH candidates corresponding to each repetition to different CORESETs, occurrence of blocking of the PDCCH candidates corresponding to each repetition can be reduced.

Note that the above description illustrates a case in which monitoring of the PDCCH candidates is controlled in index order of the number of repetitions. However, the order of detection through monitoring may be different from the order of repeated transmission.

(Second Aspect)

In a second aspect, control of mapping positions (for example, CCE indices) of the PDCCH candidates for a plurality of search space sets will be described.

As shown in FIG. 5B and FIG. 6A described above, a case in which the given parameters respectively corresponding to search space set #s and search space set #s+1 configured for a given CORESET are the same is assumed. In this case, control may be performed so that the PDCCH candidates are mapped to different positions (for example, CCE indices) between the search space sets.

For example, the UE may control the reception processing (for example, decoding processing), assuming that the CCE indices are configured so that the mapping positions of the PDCCH candidates in search space set #s and the mapping positions of the PDCCH candidates in search space set #s+1 are different from each other.

As the mapping method, at least one of first mapping (for example, Sequential mapping) and second mapping (for example, Distributed mapping) may be applied.

<First Mapping>

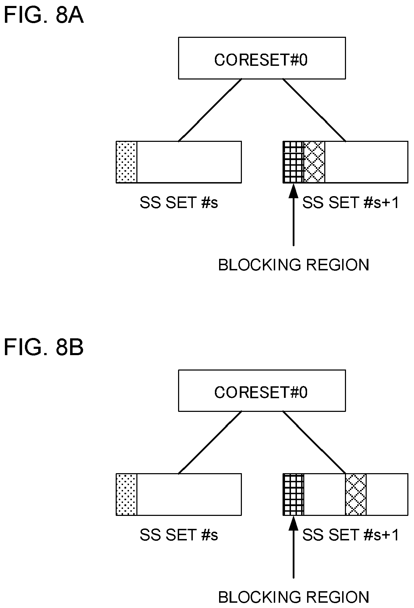

Regarding a plurality of search space sets (for example, search space sets #s and #s+1) configured for a given CORESET, configuration is performed so that the CCE indices (or the PDCCH candidates) corresponding to the search space are different from each other by a given interval (see FIG. 8A).

FIG. 8A shows a case in which the PDCCH candidates corresponding to the n-th repetition are detected in search space set #s, and the PDCCH candidates corresponding to the (n+1)-th repetition are monitored in search space #s+1. In this case, the positions (for example, CCE indices) of the PDCCH candidates corresponding to the second repetition may be mapped so as to be shifted from the positions of the PDCCH candidates corresponding to the first repetition by a given interval.

The CCE index corresponding to each search space set may be determined based on a given parameter. The given parameter may be, for example, a repetition index of the PDCCH. As an example, the UE may determine the CCE index corresponding to each search space set by using following Expression (2).

[Math. 2]

Expression (2)

$$L \cdot \left\{ Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right\} mod \left\lfloor \frac{N_{CCE,p}}{L} \right\rfloor + i + O_{rep}$$

$$O_{rep} = j \cdot L$$

$$j = 0, \cdots, N_{rep} - 1$$

In Expression (2), $O_{rep}$ corresponds to a repetition offset, $N_{rep}$ corresponds to the number of repetitions, j corresponds to a repetition index, and L corresponds to an aggregation level. Other parameters may be similar to those of Expression (1).

Here, control is performed so that the positions of the PDCCH candidates between the search space sets are different from each other by using the repetition offset determined based on the repetition index of the PDCCH and the aggregation level. Note that the repetition offset may use another parameter. Application is possible with a change being made to a part of the parameters of Expression (2).

<Second Mapping>

Regarding a plurality of search space sets (for example, search space sets #s and #s+1) configured for a given CORESET, configuration is performed so that the CCE indices (or the PDCCH candidates) corresponding to a given search space are distributed (see FIG. 8B).

FIG. 8B shows a case in which the PDCCH candidates corresponding to the n-th repetition are detected in search space set #s, and the PDCCH candidates corresponding to the (n+1)-th repetition are monitored in search space #s+1. In this case, the positions (for example, CCE indices) of the PDCCH candidates corresponding to the second repetition may be mapped in a distributed manner from the positions of the PDCCH candidates corresponding to the first repetition.

The CCE index corresponding to each search space set may be determined based on a given parameter. The given parameter may be, for example, a repetition index of the PDCCH. As an example, the UE may determine the CCE index corresponding to each search space set by using following Expression (3).

[Math. 3]

Expression (3)

$$L \cdot \left\{ Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} + O_{rep} \right\} mod \left\lfloor \frac{N_{CCE,p}}{L} \right\rfloor + i$$

$$O_{rep} = j$$

$$j = 0, \cdots, N_{rep} - 1$$

In Expression (3), $O_{rep}$ corresponds to a repetition offset, $N_{rep}$ corresponds to the number of repetitions, and j corresponds to a repetition index. Other parameters may be similar to those of Expression (1).

Here, control is performed so that the positions of the PDCCH candidates between the search space sets are different from each other by using the repetition offset determined based on the repetition index of the PDCCH. Note that the repetition offset may use another parameter. Application is possible with a change being made to a part of the parameters of Expression (3).

As described above, by separately configuring the mapping positions of the PDCCH candidates corresponding to different repetitions between the search space sets having the same given parameter based on a given condition (for example, the repetition index or the like), blocking of the PDCCH candidates can be reduced.

Whether the first mapping or the second mapping is applied may be defined in a specification, or may be configured from the base station to the UE by using higher layer signaling or the like. Alternatively, the UE may select mapping to be adopted, based on a given condition.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

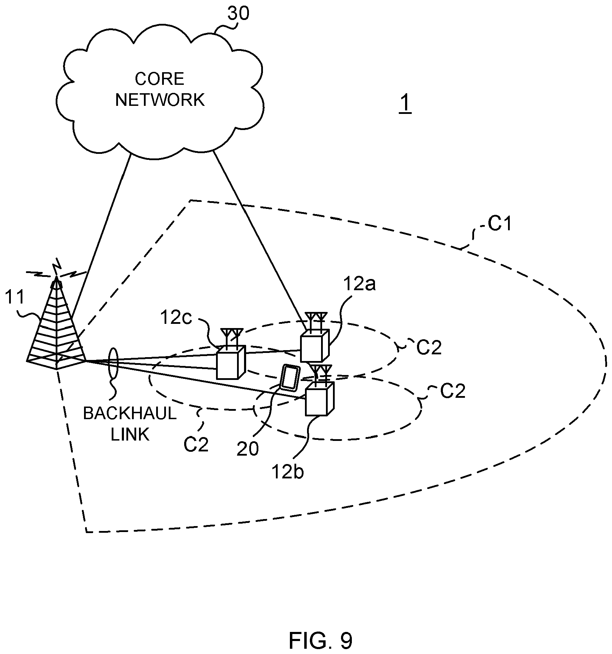

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

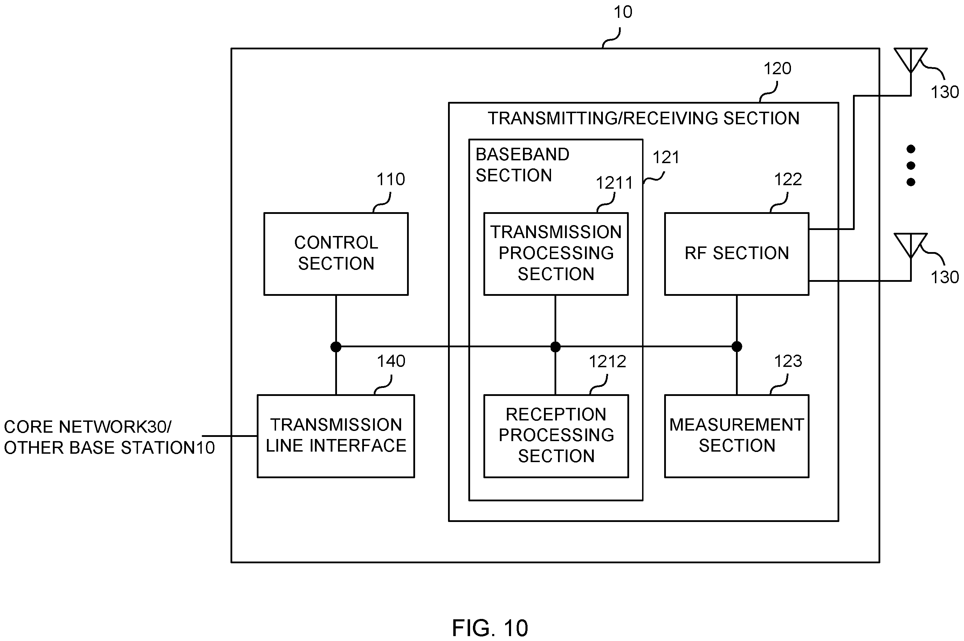

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 repeatedly transmits (repetition) a downlink control channel by using one or a plurality of control resource sets. The transmitting/receiving section 120 may transmit information related to a CORESET and information related to a search space set by using at least one of higher layer signaling, MAC control information, and downlink control information.

The control section 110 may control mapping of PDCCH candidates corresponding to respective repetitions (for example, determination of CCE indices corresponding to a search space), based on at least one of parameters of a plurality of search space sets configured for a given control resource set and an index of repeated transmission.

When given parameters (for example, given parameters reported using a higher layer parameter) respectively configured for a first search space set and a second search space set are the same, the control section 110 may perform control so that the PDCCH candidates corresponding to the respective repetitions are mapped to different positions in each search space set.

(User Terminal)

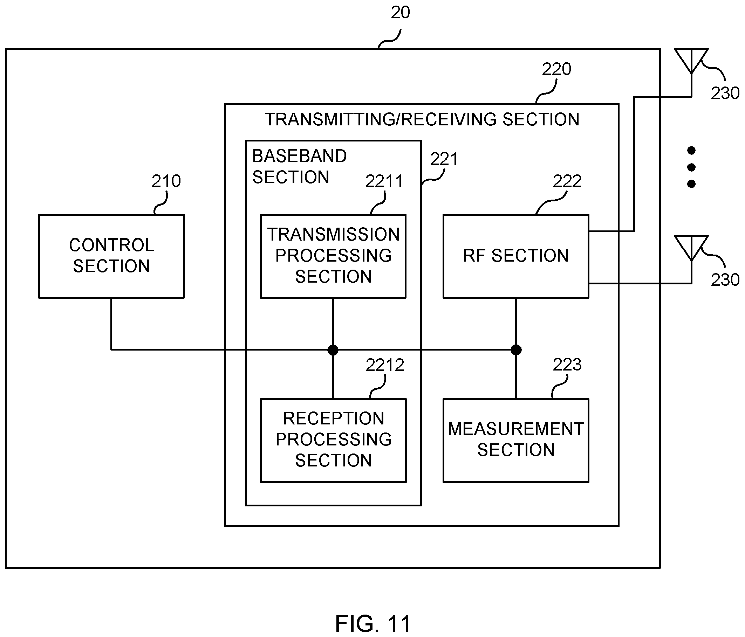

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 receives a downlink control channel (or DCI) to which repeated transmission (repetition) is applied by using one or a plurality of control resource sets. The transmitting/receiving section 220 may receive information related to a CORESET and information related to a search space set by using at least one of higher layer signaling, MAC control information, and downlink control information.

The control section 210 may perform control so as to perform monitoring of downlink control channel candidates in the identical search space set until the number of downlink control channel candidates monitored reaches a given value.

When the number of downlink control channel candidates monitored in a first search space set reaches the given value, the control section 210 may perform control so as to perform monitoring of the downlink control channel candidates in a second search space set.

The control section 210 may determine a mapping position of each of the downlink control channel candidates (or a CCE index corresponding to each of the search spaces), based on a given parameter of the plurality of search space sets.

When given parameters respectively configured for the first search space set and the second search space set are the same, the control section 210 may assume that the downlink control channel candidates mapped to respective search space sets are mapped to different positions (or different CCE indices).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

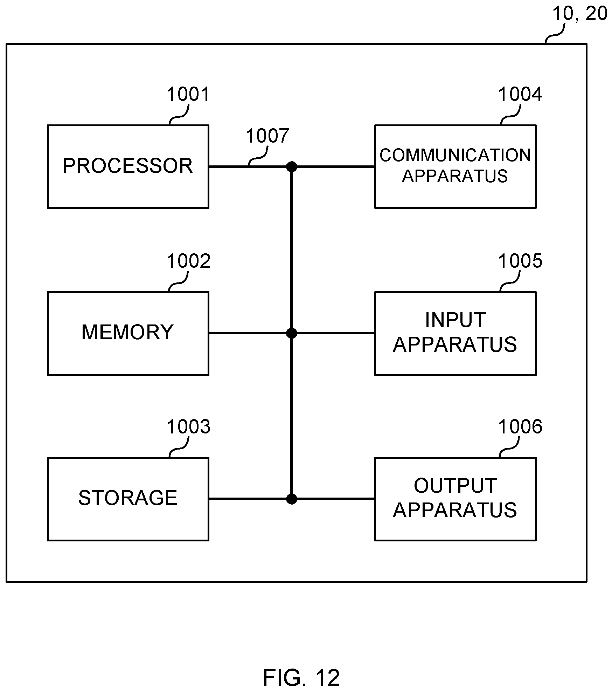

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-toterminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A user terminal comprising:

   a receiving section that receives a downlink control channel repeatedly transmitted by using one or a plurality of control resource sets; and
   a control section that controls, based on at least one of a parameter of a plurality of search space sets configured for a given control resource set and an index of repeated transmission, to monitor of downlink control channel candidates in the given control resource set.

2. The user terminal according to claim 1, wherein
   the control section performs to monitor of the downlink control channel candidates in an identical search space set until a number of the downlink control channel candidates monitored reaches a given value.

3. The user terminal according to claim 1 or 2, wherein
   when a number of the downlink control channel candidates monitored in a first search space set reaches the given value, the control section performs to monitor of the downlink control channel candidates in a second search space set.

4. The user terminal according to any one of claims 1 to 3, wherein
   the control section determines a mapping position of each of the downlink control channel candidates, based on a given parameter of the plurality of search space sets.

5. The user terminal according to claim 3, wherein

when given parameters respectively configured for the first search space set and the second search space set are same, the control section assumes that the downlink control channel candidates mapped to respective ones of the plurality of search space sets are mapped to different positions.

6. A radio communication method comprising the steps of:

receiving a downlink control channel repeatedly transmitted by using one or a plurality of control resource sets; and
controlling, based on at least one of a parameter of a plurality of search space sets configured for a given control resource set and an index of repeated transmission, to monitor of downlink control channel candidates in the given control resource set.

FIG. 1A

CORESET#0

PDCCH
CANDIDATE

SEARCH SPACE SET

CORESET#0

CORESET#0

CORESET#0

FIG. 1B

CORESET#0    CORESET#1

CORESET#0    CORESET#1

CORESET#0

CORESET#1

EP 3 926 905 A1

FIG. 2A

CORESET#0    CORESET#1    CORESET#2

FIG. 2B

CORESET#0    CORESET#1    CORESET#2    CORESET#3

EP 3 926 905 A1

FIG. 3

FIG. 4A

```
┌─────────────────┐
│   CORESET#0     │
└─────────────────┘
      /        \
┌──────────┐  ┌──────────┐
│          │  │          │
└──────────┘  └──────────┘
  SS SET #s     SS SET #s+1
```

FIG. 4B

```
┌─────────────────┐
│   CORESET#0     │
└─────────────────┘
      /        \
┌──────────┐  ┌──────────┐
│▓         │  │          │
└──────────┘  └──────────┘
  SS SET #s     SS SET #s+1
```

FIG. 4C

```
┌─────────────────┐
│   CORESET#0     │
└─────────────────┘
      /        \
┌──────────┐  ┌──────────┐
│▓     ▓   │  │          │
└──────────┘  └──────────┘
  SS SET #s     SS SET #s+1
```

EP 3 926 905 A1

FIG. 5A

CORESET#0

SS SET #s          SS SET #s+1

MONITOR

FIG. 5B

CORESET#0

SS SET #s          SS SET #s+1

FIG. 5C

CORESET#0

SS SET #s          SS SET #s+1

EP 3 926 905 A1

EP 3 926 905 A1

FIG. 6A

FIG. 6B

CORESET#0

SS SET #s          SS SET #s+1

CORESET#0

SS SET #s          SS SET #s+1

FIG. 7A

CORESET#1

SS SET #0          SS SET #1

CORESET#2

SS SET #0          SS SET #1

FIG. 7B

CORESET#1

SS SET #0          SS SET #1

MONITOR          MONITOR

CORESET#2

SS SET #0          SS SET #1

FIG. 7C

CORESET#1

SS SET #0          SS SET #1

CORESET#2

SS SET #0          SS SET #1

MONITOR          MONITOR

FIG. 8A

CORESET#0

SS SET #s

SS SET #s+1

BLOCKING REGION

FIG. 8B

CORESET#0

SS SET #s

SS SET #s+1

BLOCKING REGION

FIG. 9

10

120

TRANSMITTING/RECEIVING SECTION

BASEBAND
SECTION                    121

110                1211

CONTROL
SECTION

TRANSMISSION
PROCESSING
SECTION

122

RF SECTION

140

CORE NETWORK30/
OTHER BASE STATION10

TRANSMISSION
LINE INTERFACE

1212

RECEPTION
PROCESSING
SECTION

123

MEASUREMENT
SECTION

130

130

FIG. 10

FIG. 11

EP 3 926 905 A1

10, 20

1001
PROCESSOR

1007

1004
COMMUNICATION APPARATUS

1002
MEMORY

1005
INPUT APPARATUS

1003
STORAGE

1006
OUTPUT APPARATUS

FIG. 12

**INTERNATIONAL SEARCH REPORT**

| International application No. |
| --- |
| PCT/JP2019/005452 |

**A. CLASSIFICATION OF SUBJECT MATTER**
Int. Cl. H04L27/26(2006.01)i

According to International Patent Classification (IPC) or to both national classification and IPC

**B. FIELDS SEARCHED**

Minimum documentation searched (classification system followed by classification symbols)
Int. Cl. H04L27/26

Documentation searched other than minimum documentation to the extent that such documents are included in the fields searched
Published examined utility model applications of Japan      1922-1996
Published unexamined utility model applications of Japan   1971-2019
Registered utility model specifications of Japan          1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | NTT DOCOMO, INC., PDCCH enhancements for URLLC, | 1, 4, 6 |
| A | 3GPP TSG RAN WG1 Ad-Hoc Meeting 1901 R1-1900969, | 2-3, 5 |
| | 25 January 2019 | |
| Y | vivo, Remaining issues on search space design, | 1, 4, 6 |
| A | 3GPP TSG RAN WG1 Meeting #90bis R1-1717484, 13 | 2-3, 5 |
| | October 2017 | |
| A | vivo, PDCCH enhancements for URLLC, 3GPP TSG RAN | 1-6 |
| | WG1 Ad-Hoc Meeting 1901 R1-1900126, 25 January | |
| | 2019 | |
| A | Huawei, Summary of 7.2.6.1.1 Potential | 1-6 |
| | enhancements to PDCCH, 3GPP TSG RAN WG1 Ad-Hoc | |
| | Meeting 1901 R1-1901459, 25 January 2019 | |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22.03.2019 | 02.04.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

International application No.

PCT/JP2019/005452

## INTERNATIONAL SEARCH REPORT

C (Continuation).    DOCUMENTS CONSIDERED TO BE RELEVANT

| Category* | Citation of document, with indication, where appropriate, of the relevant passages | Relevant to claim No. |
|---|---|---|
| A | InterDigital Inc., On Potential PDCCH Enhancements for URLLC, 3GPP TSG RAN WG1 Ad-Hoc Meeting 1901 R1-1900803, 25 January 2019 | 1-6 |
| A | ZTE, On PDCCH enhancements for URLLC, 3GPP TSG RAN WG1 Ad-Hoc Meeting 1901 R1-1900069, 25 January 2019 | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010